# EUROPEAN PATENT APPLICATION

(11) **EP 0 683 264 A2**
(43) Date of publication of application: **22.11.1995**
(21) Application number: 95810246.9
(22) Date of filing: 11.04.1995
(51) Int. Cl.: D06M 13/352, D06M 13/358, D06M 13/152, D06M 13/12

(54) **Treatment of textile fibres**

(30) Priority: 20.04.1994 GB 9407822
(71) Applicant: CIBA-GEIGY AG, CH-4002 Basel (CH)
(72) Inventor: Reinehr, Dieter, Dr., D-79400 Kandern (DE); Kaufmann, Werner, Dr., CH-4310 Rheinfelden (CH)

(57) **Abstract**

The present invention provides a method for the improvement of the SPF of textile fibres comprising treating the textile fibres with 0.1 to 3.0 %, by weight on the fibre, of a UV absorber containing one or more groups capable of reacting with the textile fibres and having the formula AB in which A is a group having the formula (1), (2), (3) or (4) : 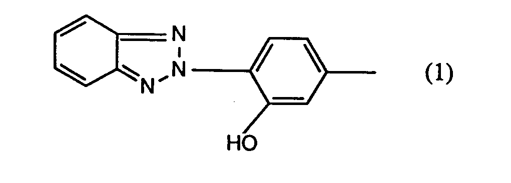 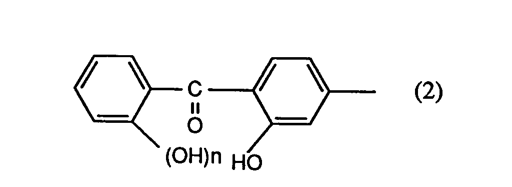 in which n is 0 or 1

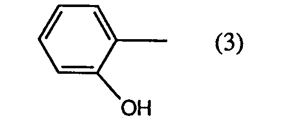

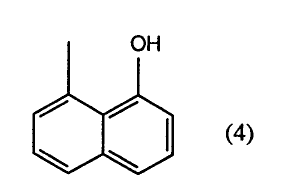

and B is a group capable of reacting with the textile fibre.

## Description

The present invention relates to a method for the treatment of textile fibres, in particular to a method for the treatment of textile fibres with a UV (ultra-violet) radiation absorber containing one or more fibre-reactive groups, and to textile fabrics produced from textile fibres so treated.

Traditionally, protection of exposed human skin against potential damage by the UV components in sunlight has been effected by directly applying to the skin a preparation containing a UV absorber. In areas of the world, e.g. Australia and America, which enjoy especially sunny climates, there has been a great increase in the awareness of the potential hazards of undue exposure to sunlight, compounded by fears of the consequences of alleged damage to the ozone layer. Some of the more distressing embodiments of skin damage caused by excessive, unprotected exposure to sunlight are development of melanomas or carcinomas on the skin.

One aspect of the desire to increase the level of skin protection against sunlight has been the consideration of additional measures, over and above the direct protection of the skin. For example, consideration has been given to the provision of protection to skin covered by clothing and thus not directly exposed to sunlight.

Most natural and synthetic textile materials are at least partially permeable to UV components of sunlight. Accordingly, the mere wearing of clothing does not necessarily provide skin beneath the clothing with adequate protection against damage by UV radiation. Although clothing containing a deeply coloured dye and/or having a tight weave texture may provide a reasonable level of protection to skin beneath it, such clothing is not practical in hot sunny climates, from the standpoint of the personal comfort of the wearer.

There is a need, therefore, to provide protection against UV radiation for skin which lies underneath clothing, including lightweight summer clothing, which is undyed or dyed only in pale shades.

Such lightweight summer clothing normally has a density of of less than 200 g/m² and has a sun protection factor (SPF) rating between 10 and 20, depending on the type of fibre from which the clothing is manufactured.

The SPF rating of a sun protectant (sun cream or clothing) may be defined as the multiple of the time taken for the average person wearing the sun protectant to suffer sun burning under average exposure to sun. For example, if an average person would normally suffer sun burn after 30 minutes under standard exposure conditions, a sun protectant having an SPF rating of 5 would extend the period of protection from 30 minutes to 2 hours and 30 minutes. For people living in especially sunny climates, where mean sun burn times are minimal, e.g. only 15 minutes for an average fair-skinned person at the hottest time of the day, SPF ratings of at least 20 are desired for lightweight clothing.

In patent specification WO 94/4515, there is described, inter alia, a method of increasing the SPF rating of a fibre or fabric, comprising the steps of providing a UV absorber, applying the UV absorber to a fabric having a density of less than 200 g/m², whereby the UV absorber is attached to the fibre and an application of less than 3% UV absorber on weight of fibre produces an SPF rating of greater than 20 for the UV absorber and fabric combination.

Surprisingly, it has now been found that the treatment of textile fibres with specific UV absorbers containing groups capable of reacting with the textile fibres, imparts excellent SPF ratings to fabrics produced from such fibre/UV absorber treatment products.

Accordingly, the present invention provides a method for the improvement of the SPF of textile fibres comprising treating the textile fibres with 0.1 to 3.0 %, by weight on the fibre, of a UV absorber containing one or more groups capable of reacting with the textile fibres and having the formula AB in which A is a group having the formula (1), (2), (3) or (4): 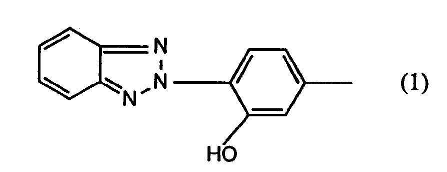 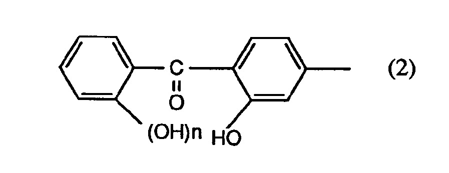 in which n is 0 or 1 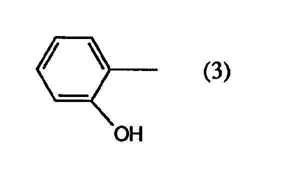 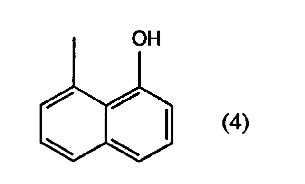 and B is a group capable of reacting with the textile fibre.

Preferred fibre-reactive groups B include halotriazinylamino groups, in particular those having the formula (5) or (6): 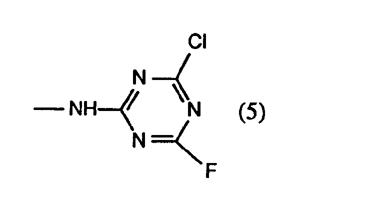 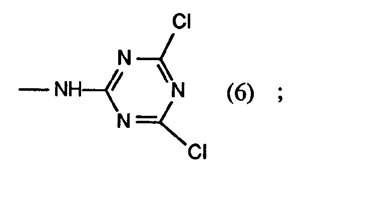 halopyrimidinylamino groups, especially those having the formula (7) or (8): 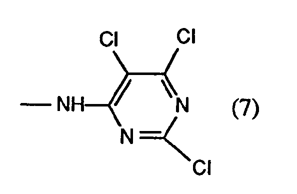 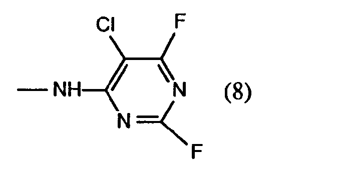 as well as aliphatic reactive groups, in particular those having the formulae 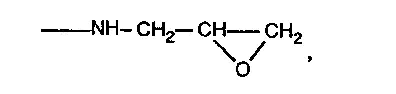 -NH-CO-C(Br)=CH₂, -NH-CO-CH=CH₂, -S0₂-CH=CH₂, -S0₂-CH₂-CH₂-OS0₃H or-SO₂-NH-CH₂-CH₂-OSO₃H. The phenyl and/or naphthyl groups in the formulae (1) to (4) may be substituted by one, two or three substituents selected from halogen, preferably chlorine, S0₃M in which M is hydrogen or alkali metal, especially sodium, alkyl (preferably C₁-C₄alkyl), alkoxy (preferably C₁-C₄alkoxy) or benzyl.

The compounds of formula AB are generically described in patent specification WO 94/4515 together with general methods for their production. Patent specification WO 94/4515, however, teaches completely away from the method of the present invention by particularly recommending (e.g. at page 8 thereof) the use of compounds derived from analogues of groups A of formulae (1) to (4) which do not contain an o-hydroxy group. The presence of the o-hydroxy group in the groups A of formulae (1) to (4) is critical in order to ensure that the compound AB provides an effective absorption of UV radiation.

The textile fibres treated according to the method of the present invention may be natural or synthetic fibres or mixtures thereof. Examples of natural fibres include vegetable fibres such as cotton, viscose, flax, rayon or linen, preferably cotton and animal fibres such as wool, mohair, cashmere, angora and silk, preferably wool. Synthetic fibres include polyester, polyamide and polyacrylonitrile fibres.

Preferably, textile fibres treated according to the method of the present invention have a density of less than 200 g/m² and have not been previously dyed in deep shades.

Some of the UV absorbers AB used in the method of the present invention may be only sparingly soluble in water and may need to be applied in dispersed form. For this purpose, they may be milled with an appropriate dispersant, conveniently using quartz balls and an impeller, down to a particle size of 1-2 microns.

As dispersing agents for such sparingly-soluble UV absorbers there may be mentioned:
- acid esters or their salts of alkylene oxide adducts, e.g., acid esters or their salts of a polyadduct of 4 to 40 moles of ethylene oxide with 1 mole of a phenol, or phosphoric acid esters of the adduct of 6 to 30 moles of ethylene oxide with 1 mole of 4-nonylphenol, 1 mole of dinonylphenol or, especially, with 1 mole of compounds which have been produced by the addition of 1 to 3 moles of styrenes on to 1 mole of phenol;
- polystyrene sulphonates;
- fatty acid taurides;
- alkylated diphenyloxide-mono- or -di-sulphonates;
- sulphonates of polycarboxylic acid esters;
- addition products of 1 to 60, preferably 2 to 30 moles of ethylene oxide and/or propylene oxide on to fatty amines, fatty amides, fatty acids or fatty alcohols, each having 8 to 22 carbon atoms, or on to tri- to hexavalent C₃-Cₛalkanols, the addition products having been converted into an acid ester with an organic dicarboxylic acid or with an inorganic polybasic acid;
- lignin sulphonates; and, in particular
- formaldehyde condensation products, e.g., condensation products of lignin sulphonates and/or phenol and formaldehyde; condensation products of formaldehyde with aromatic sulphonic acids, e.g., condensation products of ditolylethersulphonates and formaldehyde; condensation products of naphthalenesulphonic acid and/or naphthol- or naphthylaminesulphonic acids and formaldehyde; condensation products of phenolsulphonic acids and/or sulphonated dihydroxydiphenylsulphone and phenols or cresols with formaldehyde and/or urea; or condensation products of diphenyloxide-disulphonic acid derivatives with formaldehyde.

In addition to the UV absorber, a minor proportion of one or more adjuvants may also be employed in the method of the present invention. Examples of adjuvants include emulsifiers, perfumes, colouring dyes, opacifiers, optical whitening agents, bactericides, nonionic surfactants, fabric care ingredients, especially fabric softeners, stain release or stain repellant ingredients or water-proofing agents, anti-gelling agents such as nitrites or nitrates of alkali metals, especially sodium nitrate, and corrosion inhibitors such as sodium silicate.

The amount of each of these optional adjuvants should not exceed 1 % by weight on the treated fibre.

The method of the present invention, in addition to providing protection to the skin, also increases the useful life of a textile article treated according to the present invention, for example by preserving its tear strength and/or its lightfastness.

The present invention also provides a textile fabric produced from a fibre treated according to the method of the present invention as well as an article of clothing produced from the said fabric.

Such textile fabrics and articles of clothing produced from the said fabrics typically have an SPF rating of 20 and above compared with SPF ratings of 10 to 20 for untreated and undyed fabrics.

The following Examples further illustrate the present invention.

### Example 1

2,4-Dichloro-s-triazin-6-yl-2-amino-phenol-4-sulphonic acid sodium salt, which is obtained by conventional coupling of 2-amino-phenol-4-sulphonic acid with cyanuric chloride, is applied to cotton by the exhaustion method.

A 5g. sample of 100% cotton fabric (density 145 g/m²) is treated, at 50°C. over 30 minutes and at a liquor ratio of 40:1, using a laboratory dyeing machine, with the following aqueous formulation:
50g/l NaCl and
2% on weight of cotton fabric of
2,4-dichloro-s-triazin-6-yl-p-amino-o-hydroxy-phenyl-sulphonic acid sodium salt.

5g/l of Na₂C0₃ is then added over 30 minutes at 50°C. Finally, the treated cotton is thoroughly rinsed with hot and cold water and dried.

The Sun Protection Factor (SPF) is determined by measurement of the UV light transmitted through the swatch, using a double grating spectrophotometerfitted with an Ulbricht bowl. Calculation of SPF is conducted as described by B.L.Diffey and J.Robson in J. Soc. Cosm. Chem. 40 (1989), pp. 130-131.

The treated cotton has an SPF rating of above 25.

Similar results are obtained when 2,4-dichloro-s-triazin-6-yl-2-amino-phenol-4-sulphonic acid sodium salt is replaced by a compound having one of the following formulae:

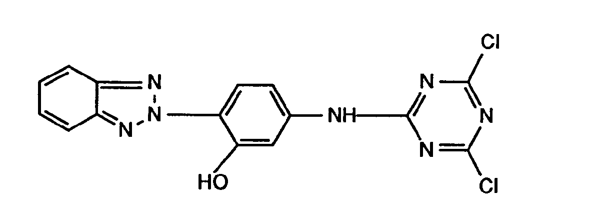

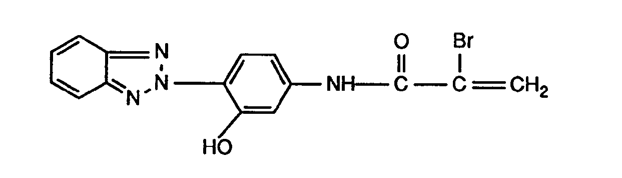

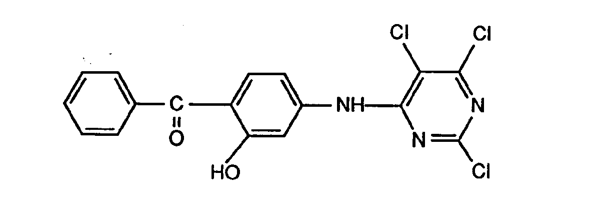

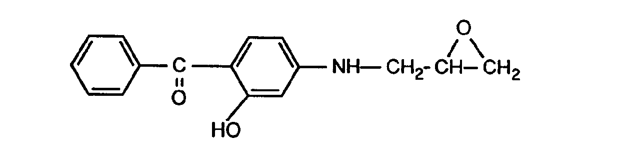

### Example 2

A 5g. sample of 100% cotton fabric (density 109 g/m²) is foularded (80% liquor uptake) with an aqueous bath containing:
4 g/I sodium bicarbonate,
50 g/I urea and
12.5 g/I of the compound having the formula:

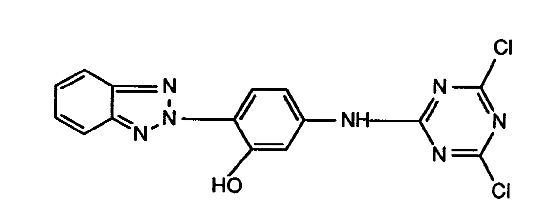

to provide a concentration of 1 % by weight of active ingredient on the cotton substrate.

As the compound of the above formula is insoluble in water, it is added as a 5% (w/w) aqueous dispersion which is obtained by milling 5% of the said compound and 1 % of Pluronic F 108, in the presence of glass beads, in deionised water.

The foularding is conducted at an alkaline pH. Drying of the treated sample is effected at 80°C. for two minutes, followed by thermofixing for 10 minutes at 120°C.

The treated cotton has an SPF rating of above 25.

### Example 3

A 5g. sample of 100% cotton fabric (density 109 g/m²) is foularded (80% liquor uptake) with an aqueous bath containing:
10 g/i soda,
100 g/I urea
10 g/i sodium sulphate,
1 g/I sodium alginate and
12.5 g/I of the compound having the formula:

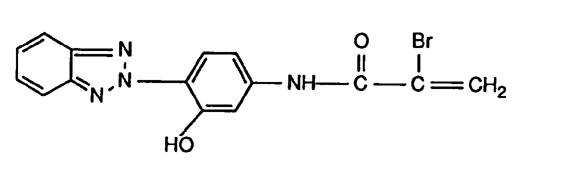

to provide a concentration of 1 % by weight of active ingredient on the cotton substrate.

As the compound of the above formula is insoluble in water, it is added as a 5% (w/w) aqueous dispersion which is obtained by milling 5% of the said compound and 1 % of Pluronic F 108, in the presence of glass beads, in deionised water.

The foularding is conducted at an alkaline pH. Drying of the treated sample is effected at 80°C. for two minutes, followed by thermofixing for 10 minutes at 120°C.

The treated cotton has an SPF rating of above 25.

### Example 4

A 5g. sample of 100% wool fabric (density 125 g/m²) is foularded (80% liquor uptake) with an aqueous bath containing:
2 g/l 40% acetic acid and
12.5 g/I of the compound having the formula: 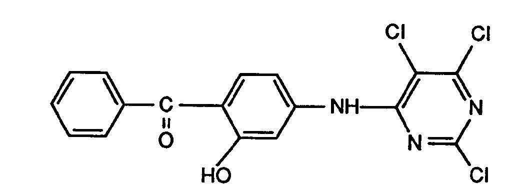
to provide a concentration of 1 % by weight of active ingredient on the wool substrate.

As the compound of the above formula is insoluble in water, it is added as a 5% (w/w) aqueous dispersion which is obtained by milling 5% of the said compound and 1 % of Pluronic F 108, in the presence of glass beads, in deionised water.

The foularding is conducted at an acidic pH (pH adjusted to 44.5 with acetic acid). Drying of the treated sample is effected at 80°C. for two minutes, followed by thermofixing for 10 minutes at 120°C.

The treated wool has an SPF rating of above 50.

### Example 5

Separate samples of bleached cotton cretonne are foularded (80% liquor uptake) with an aqueous bath containing:
2 g/i 40% acetic acid and
12.5 g/I of the compound having the formula:

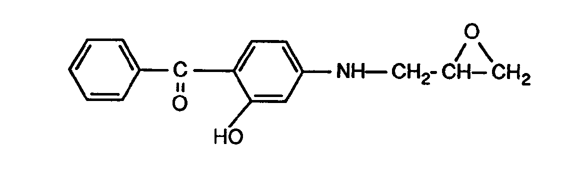

to provide a concentration of 1 % by weight of active ingredient on the cotton substrate.

As the compound of the above formula is insoluble in water, it is added as a 5% (w/w) aqueous dispersion which is obtained by milling 5% of the said compound and 1 % of Pluronic F 108, in the presence of glass beads, in deionised water.

The foularding is conducted at an alkaline pH (pH adjusted to 10-11 with soda). Drying of the treated cotton samples is effected at 80°C. for two minutes, followed by thermofixing for 10 minutes at 170°C.

The treated wool has an SPF rating of above 25.

## Claims

1. A method for the improvement of the SPF of textile fibres comprising treating the textile fibres with 0.1 to 3.0 %, by weight on the fibre, of a UV absorber containing one or more groups capable of reacting with the textile fibres and having the formula AB in which A is a group having the formula (1), (2), (3) or (4): 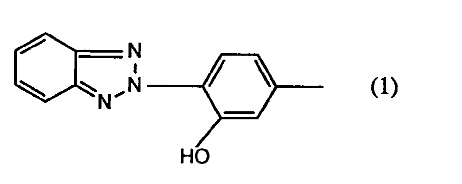 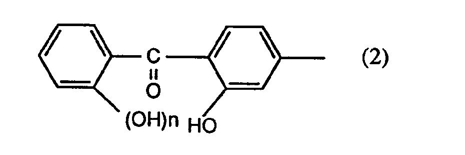 in which n is 0 or 1 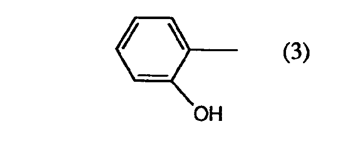 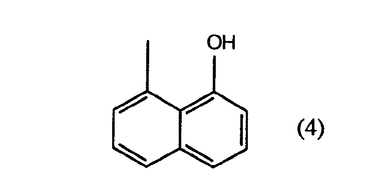 and B is a group capable of reacting with the textile fibre.

2. A method according to claim 1 in which B is a halotriazinylamino group, a halopyrimidinylamino group or an aliphatic fibre-reactive group.

3. A method according to claim 2 in which the halotriazinylamino group has the formula (5) or (6):

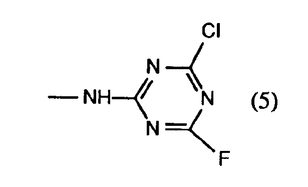

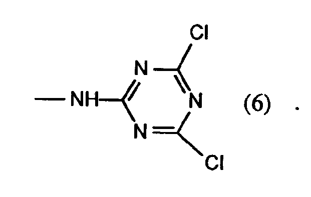

4. A method according to claim 2 in which the halopyrimidinylamino group has the formula (7) or (8):

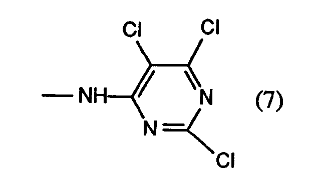

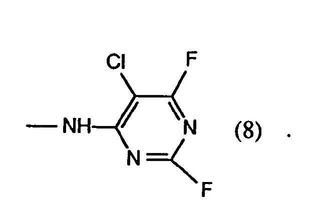

5. A method according to claim 2 in which the aliphatic fibre-reactive group has the formula 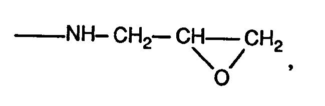 -NH-CO-C(Br)=CH₂, -NH-CO-CH=CH₂, -S0₂-CH=CH₂, -S0₂-CH₂-CH₂-OS0₃H or -S0₂-NH-CH₂-CH₂-OS0₃H.

6. A method according to any of the preceding claims in which the phenyl and/or naphthyl groups in the formulae (1) to (4) are substituted by one, two or three substituents selected from halogen, S0₃M in which M is hydrogen or alkali metal, alkyl, alkoxy or benzyl.

7. A method according to claim 6 in which halogen is chlorine and M is hydrogen or sodium.

8. A method according to any of the preceding claims in which the textile fibres treated are natural or synthetic fibres or a mixture thereof.

9. A method according to claim 8 in which the natural fibres are vegetable fibres or animal fibres.

10. A method according to claim 9 in which the vegetable fibres are cotton, viscose, flax, rayon or linen and the animal fibres are wool, mohair, cashmere, angora or silk.

11. A method according to claim 8 in which the synthetic fibres are polyester, polyamide or polyacrylonitrile fibres.

12. A method according to any of the preceding claims in which the textile fibres treated have a density of less than 200g/m² and have not been previously dyed in deep shades.

13. A method according to any of the preceding claims in which the Uv absorber is only sparingly soluble in water and is applied in dispersed form.

14. A method according to any of the preceding claims in which, in addition to the UV absorber, a minor proportion of one or more adjuvants is employed.

15. A method according to claim 14 in which the adjuvants are emulsifiers, perfumes, colouring dyes, opacifiers, optical whitening agents, bactericides, nonionic surfactants, fabric care ingredients, anti-gelling agents or corrosion inhibitors.

16. A textile fabric produced from a fibre treated according to any of the preceding claims.

17. A textile fabric according to claim 16 and having an SPF rating of 20 or higher.
